# EUROPÄISCHE PATENTSCHRIFT

(11) **EP 1 992 456 B1**
(45) Veröffentlichungstag und Bekanntmachung des Hinweises auf die Patenterteilung: **15.06.2011**
(21) Anmeldenummer: 08008410.6
(22) Anmeldetag: 05.05.2008
(51) Int. Cl.: B25J 15/00, B25J 15/06, B65H 29/00, D06H 7/24, B65G 17/32

(54) **Verfahren und Einrichtung zum Handhaben von flexiblen mattenartigen Materialstücken**
Method and device for handling flexible mat-like workpieces
Procédé et dispositif de manipulation d'objets flexibles en forme de tapis

(30) Priorität: 04.05.2007 DE 202007006528 U
(43) Veröffentlichungstag der Anmeldung: 19.11.2008
(73) Patentinhaber: KUKA Systems GmbH, 86165 Augsburg (DE)
(72) Erfinder: Huber, Rudolf, 81245 München (DE); Gruber, Markus, 86415 Mering (DE)
(74) Vertreter: Ernicke, Klaus Stefan

(56) Entgegenhaltungen:
- EP-A- 0 145 630
- EP-A- 0 721 903
- WO-A-00/23325
- WO-A-85/01037
- WO-A-2004/021485
- WO-A-2008/010239
- DE-A1- 2 111 637
- DE-A1- 4 026 969
- JP-A- 7 069 470
- US-A- 3 127 167
- US-A- 4 677 778
- US-A- 4 954 033
- US-A- 6 139 004
- US-A1- 2004 089 516
- US-A1- 2007 187 026
- US-E- R E36 329

## Beschreibung

Die Erfindung betrifft ein Handhabungsverfahren und eine Handhabungseinrichtung für Materialstücke mit den Merkmalen im Oberbegriff des Verfahrens- und Vorrichtungshauptanspruchs.

Derartige Materialstücke können mattenartig und flexibel sein sowie aus Faserwerkstoffen bestehen, z.B. kohlenstofffaserverstärkten Kunststoffen, die zur Herstellung von leichtgewichtigen Bauteilen mit hohen Festigkeitseigenschaften in verschiedensten technischen Bereichen, z.B. im Flugzeug- oder Fahrzeugbau, Verwendung finden. Die mattenartigen Materialstücke sind konturiert und werden aus einem bahnartigen Ausgangsmaterial in einer Schneidstation ausgeschnitten, wobei durch die Konturenbeschneidung Verschnitt anfällt. Diese ausgeschnittenen Materialstücke sind empfindlich und lassen sich nur schwer manuell handhaben, insbesondere wenn der Faserwerkstoff mit einem Kunststoffharz getränkt ist.

Aus der US 4,677,778 A ist ein menschenähnlicher Roboter zum Vereinzeln und Umblättern von Seiten eines Buches bekannt. Er besitzt eine Handwurzel mit mehreren Fingern, die jeweils aus mehreren hintereinander aufgereihten Gelenken und einer drehbaren Gummirolle am freien Fingerende bestehen. Die ersten und zweiten Finger kontaktieren die Buchseite mittels der Gummirolle an ihrem Fingerende und werden dabei seitlich aufeinander zu bewegt. Die Gummirollen schieben die Buchseite zusammen und bilden eine Falte, die anschließend vereinzelt und dann im Klemmschluss zwischen den Gummirollen gehalten wird.

Die JP 07-069 470 A offenbart eine pick-up device für blattförmige Vinyl-Tüten. An einem Schwenkarm ist endseitig ein Greifwerkzeug mit zwei Klemmrollen an Schwenkfingern angeordnet, die ähnlich wie beim vorgenannten Stand der Technik an die Tüte angedrückt und seitlich aufeinander zu bewegt werden, wobei eine Falte in der obersten Tüte ausgeformt und im Klemmschluss zwischen den Rollen gehalten wird.

Aus der US 2004/0089516 A1 ist eine Rollenschneidmaschine bekannt, die aus einer tangential an eine rotierende Trommel zugeführten Bahn mittels einer Schneidrolle Stücke abschneidet, die von in Umfangsrichtung verteilten Schalenabschnitten auf der Trommel festgehalten und über die Drehbewegung weiter zu einer Abgabestelle transportiert werden, wo sie an eine andere laufende Trägerbahn abgegeben werden. Die kontinuierlich zugeführte Materialbahn wird lediglich in Stücke abgelängt, wobei kein Verschnitt entsteht.

Es ist Aufgabe der vorliegenden Erfindung, ein Verfahren und eine Einrichtung zum verbesserten Handhaben von Materialstücken aufzuzeigen.

Die Erfindung löst diese Aufgabe mit den Merkmalen im Verfahrens- und Vorrichtungshauptanspruch.
Die beanspruchte Handhabungstechnik hat den Vorteil, dass von einer Vorlage, insbesondere aus einer Materialbahn, mehrere Materialstücke gemeinsam aufgenommen und in geeigneter Weise wieder abgegeben werden können. Die verschiedenen Materialstücke können beliebige und dabei auch unregelmäßige Umfangskonturen haben und in beliebiger Lage angeordnet und ausgerichtet sein. Sie können flächig aufgenommen und abgegeben oder auf- und abgewickelt werden.

Hierfür weist die Handhabungseinrichtung ein Handlingwerkzeug mit ein oder mehreren, ggf. beweglichen, insbesondere gesteuert drehbar angetriebenen walzenartigen Materialträgern auf. Diese können eine an die Materialstücke angepasste Form und Aufnahmefunktion haben und die Materialstücke an ihrem Umfang aufnehmen. Sie können z.B. als Wickelträger oder als Materialstückträger ausgebildet sein. Die mehreren und ggf. unterschiedlichen Materialträger können einzeln an einem Gestell gelagert oder in einem beweglichen Revolver oder einer anderen Wechseleinrichtung zusammengefasst sein. Dies erhöht die Flexibilität und ermöglicht eine Zwischenlagerung von Materialstücken am Revolver.

Die Handhabungseinrichtung eignet sich für unterschiedlichste Einsatzbereiche. Besonders günstig ist der Einsatz in Verbindung mit flexiblen und mattenartigen Materialstücken, die aus einer Materialbahn ausgeschnitten werden können, wobei der Verschnitt minimiert und der Ausgangswerkstoff bestmöglich ausgenutzt werden kann. Zur Verschnittminimierung können Materialstücke auch mit ihren Außenkonturen in der Art eines Puzzles miteinander vernestet sein. Durch diese Schnittoptimierung können die häufig länglichen Materialstücke Schräglagen einnehmen und mit ihren Längserstreckungen von der Materialbahnachse abweichen und auch untereinander unterschiedliche Winkellagen haben.

Mit der beanspruchten Handhabungstechnik können derartige vernestete Materialstücke gezielt aus einer beliebigen Vorlage, z.B. auf einem Schneidtisch entnommen und zu einer Ablage auf einem separaten Ablagetisch oder ggf. auch gleich in einer Auflegestation in einer dortigen Form transportiert und dort wiederum gezielt abgegeben werden. Die Aufnahme, der Transport und die Abgabe großer Materialstücke können durch einen Wickelprozess vereinfacht und beschleunigt werden, wobei die biegeelastischen und beschädigungsempfindlichen Materialstücke besonders schonend und insbesondere faltenfrei gehandhabt und transportiert werden können.

Das Aufwickeln hat in Verbindung mit einem mehrachsigen Manipulator, insbesondere einem Gelenkarmroboter, den Vorteil, dass eine Aufnahme der Materialstücke trotz unterschiedlichster winkellagen und Konturformen möglich ist. Der Manipulator kann hierfür das Handlingwerkzeug in der jeweils am besten geeigneten Lage und Ausrichtung halten und führen.

Mit dem Manipulator können auch die Transportprozesse sicher durchgeführt werden. Ein solcher Manipulator oder Gelenkarmroboter bietet ferner Vorteile bei der Abgabe der Materialstücke und dem dabei z.B. erfolgenden Abwickeln, insbesondere wenn hierbei Materialstückstapel für eine z.B. manuelle Weiterverarbeitung gebildet werden.

Mit ein oder mehreren Manipulatoren oder Robotern und der hierfür eingesetzten hochflexiblen Steuertechnik ist es möglich, die Materialstücke in unterschiedlichsten Reihenfolgen aus der Bahnvorlage aufzunehmen und zwischenzulagern. Bei der Abgabe können Materialstückstapel mit einer bestimmten Stapelreihenfolge gebildet werden, die besonders ergonomisch, fertigungs- oder prozessgünstig ist oder die andere Vorteile hat oder anderen Vorgaben folgt. Die Aufnahmereihenfolge kann durch die Abgabereihenfolge bestimmt werden.

Eine Stapelbildung hat insbesondere Vorteile, wenn Materialstücke aus unterschiedlichen Materialbahnen und unterschiedlichen Werkstoffen verarbeitet werden sollen. Hierbei kann eine Handhabungseinrichtung mehrere Schneidstationen bedienen und auf einem gemeinsamen Ablagetisch mehrere werkstoffreine Materialstückstapel bilden.

Das Handlingwerkzeug kann eine Aufnahmeeinrichtung oder eine Selektionseinrichtung aufweisen, mit der die Aufnahmebereichsgröße verändert und auf die Größe des jeweiligen Materialstückendes eingestellt werden kann. Diese Größenanpassung erleichtert die gezielte Aufnahme der Materialstücke, wobei letztere beliebige Formen und Größen haben können. Durch die selektive Materialaufnahme ist es möglich, das gewünschte Materialstück direkt aus der Bahnvorlage aufzunehmen und aufzuwickeln, wobei der umgebende Verschnitt und auch die anderen benachbarten Materialstücke liegen bleiben können. Hierdurch ist eine Vereinzelung der Materialstücke während der Aufnahme möglich.

Je nach Ausgestaltung der Materialstücke und der Stückgeometrie können auch mehrere benachbarte Materialstücke gleichzeitig aufgenommen bzw. aufgewickelt werden. Ihre Abgabe kann ebenfalls gleichzeitig oder zeitversetzt erfolgen.

Für die Aufnahme der Materialstücke und ggf. für das Anwickeln ist es vorteilhaft, eine steuerbare Saugeinrichtung mit einer veränderlichen Saugbereichsgröße einzusetzen. Hierfür sind in den Unteransprüchen verschiedene vorteilhafte Ausgestaltungen angegeben.

Die Materialstücke lassen sich bei der Abgabe bzw. beim Abwickeln in geeigneter Weise positionieren und dabei auch in ihrer Lage stabilisieren, was besonders bei einer Stapelbildung von Vorteil ist. Hierfür ist es günstig, ein inertes Fluid in geringer Menge einzusetzen, welches beim Abwickeln bzw. bei der Ablage verteilt wird und dabei eine dünne Haftschicht bilden kann, die ein seitliches Abschieben der Materialstücke verhindert.

Beim Auf- und Abwickeln ist es günstig, den Wickelträger einerseits entlang des Materialstücks durch eine Vorschubbewegung des Manipulators zu bewegen und gleichzeitig den Wickelträger drehend anzutreiben. Die Dreh- und Vorschubgeschwindigkeiten können aufeinander abgestimmt sein, so dass der Wickelvorgang optimal ablaufen kann und ungünstige Einwirkungen auf das Materialstück vermieden oder zumindest eingeschränkt werden können. Insbesondere können innere Spannungen und Verzüge im Materialstück vermieden oder reduziert werden.

Der Auf- und Abwickelvorgang kann beschleunigt werden, wenn der Schneidtisch und/oder der Ablagetisch mitbewegt wird. Dies ist z.B. bei der Ablage durch eine den Manipulatorvorschub entgegengesetzt gerichtete Tischbewegung möglich. Der Ablagetisch kann hierfür ein oder mehrere Bewegungsachsen haben und z.B. als x-y-Tisch ausgebildet sein.

Durch die überlagerten Vorschubgeschwindigkeiten kann die Abwickelgeschwindigkeit erhöht werden. Diese Erhöhung kann sich in einer Verkürzung der Taktzeit und in einer Beschleunigung des Handhabungsprozesses äußern.

Das Handlingwerkzeug kann ein oder mehrere Zusatzwerkzeuge aufweisen, die auf die Materialstücke und/oder die Materialträger und/oder die Peripherie einwirken und prozessunterstützend wirken. Sie können ggf. ein oder mehrere eigene Bewegungsachsen aufweisen.

In den Unteransprüchen sind weitere vorteilhafte Ausgestaltungen angegeben.

Die Erfindung ist in den Zeichnungen beispielsweise und schematisch dargestellt. Im einzelnen zeigen:
- Figur 1:: eine schematische Draufsicht auf eine Bearbeitungsanlage für Materialbahnen und flexible mattenartige Materialstücke aus Faserwerkstoffen mit mehreren Schneidstationen, einer gemeinsamen Handhabungseinrichtung und einer Auflegestation,
- Figur 2 und 3:: eine Handlingeinrichtung in Seitenansicht und Draufsicht gemäß Pfeil III von Figur 2,
- Figur 4:: eine Seitenansicht der Handlingeinrichtung gemäß Pfeil IV von Figur 2 beim Aufnehmen und Anwickeln,
- Figur 5:: eine Seitenansicht gemäß Figur 4 beim Abwickeln,
- Figur 6:: eine perspektivische Ansicht eines Handhabungsgeräts mit einem Roboter und einem Handlingwerkzeug,
- Figur 7 bis 10:: eine Variante der Handlingeinrichtung mit einem revolverartigen Handlingwerkzeug in mehreren perspektivischen Ansichten und
- Figur 11:: eine vergrößerte Detailansicht des Handlingwerkzeugs mit einem Zusatzwerkzeug.

Die Erfindung betrifft eine Handhabungseinrichtung (15) und ein Handhabungsverfahren für Materialstücke (6,7,8,9,10,11), die eine beliebige Art und Konsistenz und Anordnung haben können und die z.B. flexibel und mattenartig ausgebildet sind. Die Erfindung betrifft ferner eine Bearbeitungsanlage (1) mit ein oder mehreren Handhabungseinrichtungen (15).

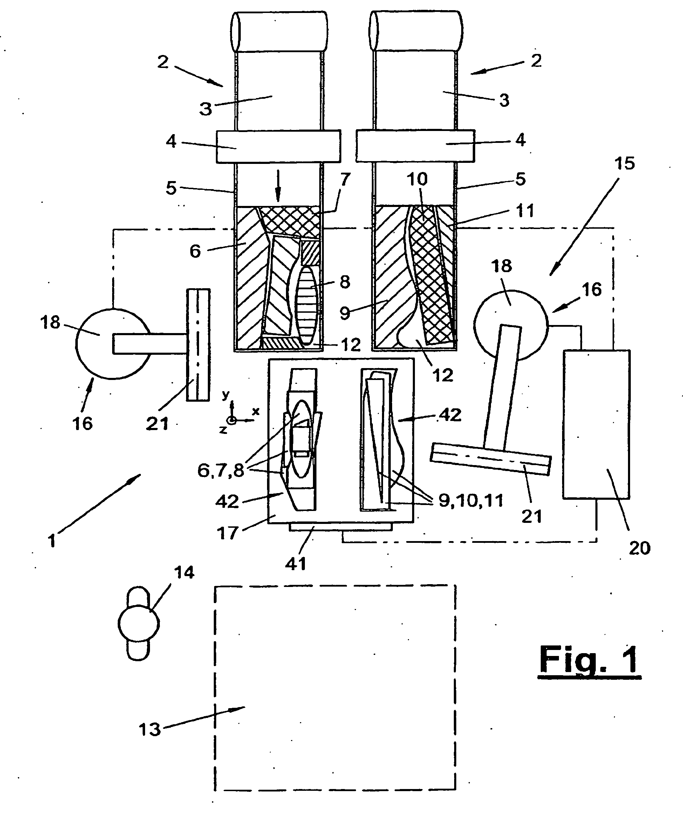

Figur 1 zeigt eine Bearbeitungsanlage (1) für ein oder mehrere Materialbahnen (3) aus einem flexiblen mattenartigen Material, welches z.B. aus Faserwerkstoffen besteht. Die Faserwerkstoffe können in gewebter oder ungewebter Form als Vliesbahnen oder Gewebebahnen vorliegen. Der Faserwerkstoff kann auch mit einem Verbindungsmittel, insbesondere einem Kunststoffharz versehen und z.B. getränkt oder imprägniert oder in einer Füllmasse eingebettet sein.

Die dünne und biegeelastische Materialbahn (3) kann insbesondere aus einem mit Kohlenstofffasern verstärkten Kunststoff, nachfolgend als CFK bezeichnet, bestehen. Hier sind hochfeste Kohlenstofffasern in ein oder mehreren Lagen als Verstärkung in einer Matrix aus einem geeigneten Kunststoff, z.B. aus einem Duromer, eingebettet. Das Duromer kann z.B. ein Epoxidharz oder ein Thermoplast sein. Die Matrix kann alternativ aus anderen Werkstoffen, z.B. aus Keramik bestehen, was für besonders hochbelastete Bauteile bedeutsam ist. Bei CFK haben z.B. die Fasern im wesentlichen die gleiche Ausrichtung. Derartige Fasermaterialien werden in unterschiedlichen technischen Bereichen, z.B. im Flugzeug- und Fahrzeugbau, eingesetzt.

In der nachfolgend erläuterten Weise werden aus der Materialbahn (3) mehrere Materialstücke (6,7,8,9,10,11) ausgeschnitten und zur Herstellung von Formteilen verwendet, die in einer Auflegestation (13) durch Schichtaufbau hergestellt werden. Die Materialbahn (3) kann an der Ober- und/oder Unterseite mit einer ablösbaren Schutzfolie versehen sein.

Die Bearbeitungsanlage (1) weist ein oder mehrere Schneidstationen (2) auf. In der gezeigten Ausführungsform sind z.B. zwei Schneidstationen (2) vorhanden, auf denen z.B. unterschiedliche Materialbahnen (3) laufen, die sich hinsichtlich der Bahnengröße, des Werkstoffs oder anderer Eigenschaften unterscheiden können.

Die Materialbahnen (3) können in beliebiger Form,. z.B. in den zeichnerisch in Figur 1 angedeuteten Coils angeliefert werden. Die Schneidstationen (2) weisen eine Abzugeinrichtung auf, mit der die Materialbahn (3) vom Coil abgezogen und auf einen Schneidtisch (5) gezogen werden kann, wo sie im Stand oder während einer Vorschubbewegung in Pfeilrichtung von Figur 1 bearbeitet werden kann. Aus der breiten Materialbahn (3) werden mehrere Materialstücke (6,7,8,9,10,11) ausgeschnitten.
Hierfür hat jede Schneidstation (2) mindestens ein geeignetes Trennwerkzeug (4), welches z.B. einen mehrachsig beweglichen Trennkopf aufweisen kann. Das Ausschneiden kann mittels ein oder mehrerer Laserstrahlen, mittels ein oder mehrerer unter Hochdruck stehender Fluidstrahlen, mit Schneidmessern oder auf beliebig andere Art und Weise erfolgen. Die Schneidstation (2) kann in beliebig geeigneter Weise ausgebildet sein, z.B. entsprechend der DE 40 26 969 A1.

Das Trennwerkzeug (4) schneidet aus der Materialbahn (3) in einem festgelegten Schnittbereich mehrere Materialstücke (6,7,8,9,10,11) aus, welche beliebige Außenkonturen haben können. Um den Verschnitt (12) möglichst klein zu halten, werden die Zuschnitte derart optimiert, dass die Materialstücke (6,7,8,9,10,11) weitestgehend mit ihren Außenkonturen ineinander vernestet werden. Es ergibt sich das in Figur 1 gezeigte puzzelartige Schnittbild. Die Materialstücke (6,7,8,9,10,11) können beliebige Proportionen haben. Sie können insbesondere eine längliche Form besitzen, die sich in Faserlängsrichtung oder quer dazu erstrecken kann. Je nach Schnittbild können die Materialstücke (6,7,8,9,10,11) längs der Vorschubrichtung und Längsachse der Materialbahn (3) ausgerichtet sein. Sie können alternativ eine Schrägausrichtung oder auch eine Querausrichtung haben.

Am Ende des Schneidtisches (5) werden die vernesteten Materialstücke (6,7,8,9,10,11) in einem ebenen Bahnabschnitt bereit gestellt. Sie können dabei in Ruhe sein oder in Pfeilrichtung vorwärts transportiert werden.

Die Bearbeitungsanlage (1) weist mindestens eine der Schneidstation (2) zugeordnete mechanische und automatisierte Handhabungseinrichtung (15) auf. In der gezeigten Ausführungsform von Figur 1 ist eine gemeinsame Handhabungseinrichtung (15) für beide Schneidstationen (2) vorgesehen. Die Handhabungseinrichtung (15) besitzt ein oder mehrere Handhabungsgeräte (16). In der gezeigten Ausführungsform sind zwei Handhabungsgeräte (16) vorhanden. Alternativ ist die Anordnung von einem Handhabungsgerät oder von mehr als zwei Handhabungsgeräten (16) möglich.

Die Handhabungseinrichtung (15) oder die Bearbeitungsanlage (1) kann ferner ein oder mehrere Ablagetische (17) aufweisen. Die Handhabungseinrichtung (15) nimmt die Materialstücke (6,7,8,9,10,11) aus dem Schnittbild gezielt auf und transportiert sie zum Ablagetische (17) oder zu einer Auflegestation (13). In der gezeigten Ausführungsform werden die Materialstücke (6,7,8,9,10,11) auf einem solchen Ablagetisch (17) abgelegt und können dann von einem Werker (14) aufgenommen und in der Auflegestation (13) zur Bildung eines Formkörpers, z.B. eines Flugzeugflügels, einer Fahrzeug-oder Flugzeugtür oder dgl., weiterverarbeitet werden. In Abwandlung der gezeigten Ausführungsform können die Handhabungsgeräte (16) die Materialstücke (6,7,8,9,10,11) direkt zur Auflegestation (13) bringen und dort in eine Form einlegen. Auf einen Ablagetisch (17) kann dabei verzichtet werden. Bei der Bildung des Formkörpers (nicht dargestellt) können die Materialstücke (6,7,8,9,10,11) in mehreren Lagen und mit ggf. unterschiedlichen Orientierungen übereinander gelegt werden, wobei die Lagenzahl und -anordnung sich nach den Belastungs- und Festigkeitsanforderungen des Formkörpers richten können.

Das Handhabungsgerät (16) besteht aus einem mehrachsigen Manipulator (18) mit einem Handlingwerkzeug (21), welches zum Aufnehmen und Abgeben, beispielweise zum Aufwickeln und Abwickeln von mindestens einem Materialstück (6,7,8,9,10,11) dient.

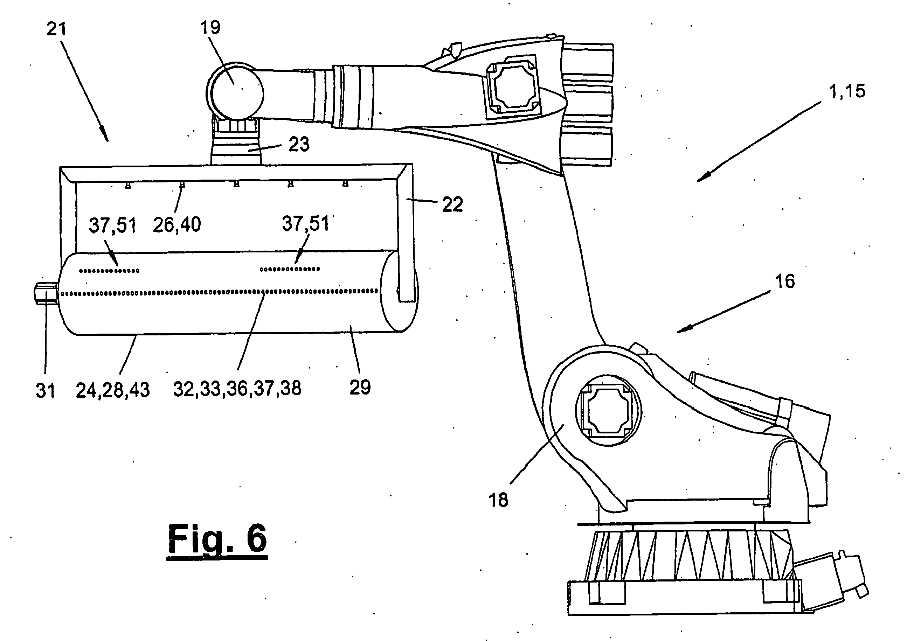

Der Manipulator (18) kann in beliebig geeigneter Weise ausgebildet sein und rotatorische und/oder translatorische Achsen aufweisen. Im gezeigten Ausführungsbeispiel ist er als mehrachsiger Gelenkarmroboter ausgebildet, der z.B. sechs rotatorische Achsen aufweist. Figur 6 verdeutlicht diese Ausführungsform, bei der der Robotergrundkörper aus einem Sockel und einer darauf drehbar gelagerten Schwinge besteht, an deren oberem Ende ein Ausleger schwenkbar angeordnet ist, der am vorderen Ende eine mehrachsige Roboterhand (19) und am rückwärtigen Ende mehrere Motoren für die Handachsen trägt. Die Roboterhand (19) hat z.B. drei rotatorische Achsen. Alternativ kann sie auch zwei Handachsen besitzen. In weiterer Abwandlung kann der Gelenkarmroboter ein oder mehrere Zusatzachsen, z.B. translatorische oder rotatorische Fahrachsen besitzen. Ferner kann der Manipulator ein oder mehrere translatorische Bewegungsachsen besitzen. In der gezeigten Ausführungsform sind die Manipulatoren (18) flurgebunden. Sie können alternativ an einem Gestell seitlich oder über Kopf aufgehängt sein.

Der Arbeitsbereich der ein oder mehreren Manipulatoren (18) umfasst den Endbereich des Schneidtischs (5) mit den hier bereit gestellten Materialstücken (6,7,8,9,10,11) und den anschließenden Ablagetisch (17) sowie ggf. auch die Auflegestation (13). Die Manipulatoren (18) haben ein oder mehrere Robotersteuerungen (20). In den Steuerungen (20) können weitere Achsen und Antriebe angeschlossen werden, die z.B. im Handlingwerkzeug (21) oder am Ablagetisch (17) angeordnet sind. Die Position und Orientierung der Materialstücke (6,7,8,9,10,11) im Schnittbild und auf dem Schneidtisch (5) wird der Robotersteuerung (20) in geeigneter Weise mitgeteilt, z.B. über eine Schnittstelle der Schneidstation (2) und/oder über eine geeignete Sensorik zur Erfassung der tatsächlichen Position und Orientierung, z.B. per Kamera und Bildauswertung.

In der gezeigten Ausführungsform ist ein einzelner Ablagetisch (17) vorhanden, auf dem die Materialstücke (6,7,8,9,10,11) einzeln nebeneinander oder wie in der gezeigten Ausführungsform in ein oder mehreren Materialstückstapeln (42) übereinander angeordnet sein können. Der Ablagetisch (17) hat eine ebene Auflagefläche und kann Führungs- oder Fixiermittel für die Materialstücke (6,7,8,9,10,11) oder die Materialstückstapel (42) aufweisen, z.B. in Form einer Saugeinrichtung unter der Auflagefläche. Der Ablagetisch (17) kann starr angeordnet sein. In der gezeigten Ausführungsform hat er ein oder mehrere Bewegungsachsen. Z.B. kann er als x-y-Tisch ausgebildet sein und zwei horizontale und translatorische Bewegungsachsen in x- und y- Richtung haben. Zusätzlich kann eine Hubeinrichtung in z-Richtung vorhanden sein. In Abwandlung der gezeigten Ausführungsform kann nur eine Verschiebeachse, z.B. in die x- oder y-Richtung vorhanden sein. Für die Bewegungsachsen gibt es jeweils einen zugehörigen Tischantrieb (41), der in beliebig geeigneter Weise ausgebildet sein kann und der insbesondere mit der Robotersteuerung (20) verbunden sein kann und dort als Zusatzachse gemeinsam mit den Robotern (18) gesteuert wird.

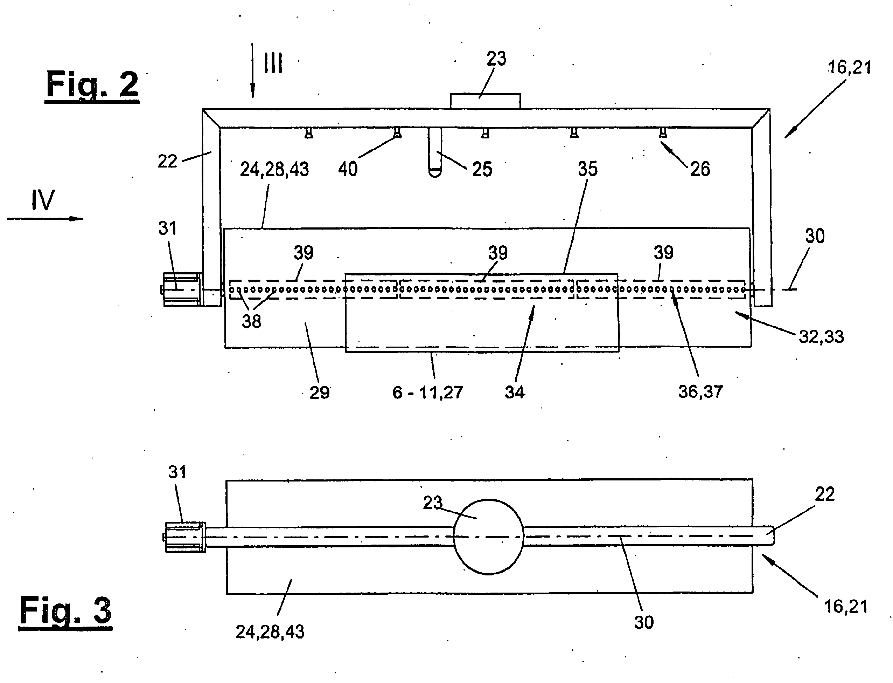

Figur 2 bis 5 zeigen eine erste Variante des Handlingwerkzeugs (21) in verschiedenen Ansichten. Das Handlingwerkzeug (21) besitzt jeweils ein Gestell (22), welches über einen geeigneten Anschluss (23) mit der Roboterhand (19) lösbar verbunden werden kann. Hierfür kann eine fernsteuerbare oder automatische Wechselkupplung vorhanden sein. Hierbei können auch Betriebsmittelverbindungen, z.B. eine Energieversorgung und insbesondere eine Zuführung von Signal- und Leistungsströmen, gekoppelt werden.

Das Gestell (22) kann vom Manipulator (18) mehrachsig im Raum bewegt werden und insbesondere von der Roboterhand (19) mehrachsig gedreht und geschwenkt werden. In der gezeigten Ausführungsform hat das Gestell (22) eine bügelartige Form und besteht aus dem Querträger mit dem Anschluss (23) und zwei hiervon endseitig abstehenden Stützarmen, an denen mindestens ein Materialträger (24) starr oder beweglich gelagert ist. Der Materialträger (24) kann drehbar gelagert, angetrieben und steuerbar sein. Der Materialträger (24) kann insbesondere einen steuerbaren Drehantrieb (31) aufweisen, mit dem der Materialträger (24) in eine bestimmte Drehstellung gebracht und gegenüber einem Materialstück (6,7,8,9,10,11) positioniert werden kann.

Der Materialträger (24) ist walzenartig ausgebildet. Er kann eine massive Walzen- oder Stangenform, eine hohle Rohrform oder eine Käfigform, z.B. mit mehreren parallelen Stangen, haben und einen beliebig geformten, z.B. kreisrunden, ovalen oder prismatischen Querschnitt besitzen. Er nimmt ein oder mehrere Materialstücke (6, 7, 8, 9, 10, 11) an seinem Umfang oder Mantel auf. Der Umfang kann als ein- oder mehrteilige Mantelfläche ausgebildet sein oder von einer Hüllkurve um einen Stangenkäfig gebildet werden. Die Mantelfläche oder ihre Flächenabschnitte können eben oder gekrümmt sein, wobei die Krümmung eine oder mehrere Krümmungsachsen haben kann und gleichmäßig oder ungleichmäßig sein kann. Der Materialträger (24) kann sich bevorzugt um seine ggf. zentrale Längsachse (30) drehen.

Der Materialträger (24) kann mindestens einen Wickelträger (43) bilden oder aufweisen, mit dem durch eine Drehung mindestens ein Materialstück (6,7,8,9,10,11) am Mantel aufgenommen wird. Der Materialträger (24) kann alternativ als Materialstückträger (44) ausgestaltet sein oder mindestens einen Materialstückträger (44) aufweisen. Der Materialstückträger (44) kann z.B. aus einer Trägerstange (45) mit einem prismatischen Querschnitt bestehen.

Der Wickelträger (43) kann in beliebig geeigneter Weise ausgebildet sein und dient zur Bildung und Aufnahme von ein oder mehreren Wickeln (27) aus jeweils einem Materialstück (6,7,8,9,10,11). In der gezeigten Ausführungsform ist der Wickelträger (43) als eine im wesentlichen zylindrische Rolle (28) ausgebildet, die an ihren beiden Enden im Gestell (22) und an den Stützarmen um ihre Längsachse (30) drehbar gelagert ist. Der Rollenmantel (29) besteht z.B. aus einem haft- und reibungsarmen Material, z.B. PTFE. Die Mantelbeschaffenheit verhindert ein unerwünschtes Anhaften oder Ankleben von Teilen der Materialbahn (3), insbesondere des Verschnitts (12).

Der Wickelträger (43) bzw. die Rolle (28) ist drehbar angetrieben und weist hierfür einen steuerbaren Drehantrieb (31) auf, der sich am Gestell (22) abstützt. Der Drehantrieb (31) kann mit der Robotersteuerung (20) verbunden sein und wird dort als Zusatzachse gemeinsam mit den Robotern (18) gesteuert.

Am Wickelträger (43) können ein oder mehrere Materialstücke (6,7,8,9,10,11) aufgewickelt und dabei vom Schneidtisch (5) gelöst werden. Zum Anwickeln bzw. für die Wickelbildung ist mindestens eine steuerbare Aufnahmeeinrichtung (32) für ein Materialstückende (35) vorgesehen. Sie kann durch den steuerbaren Drehantrieb (31) in die Aufnahmeposition zum Materialstück (6,7,8,9,10,11) gebracht werden. Die Aufnahmeeinrichtung (32) kann eine Selektionseinrichtung (33) zur Einstellung der Größe des Aufnahmebereichs (34) und zur Anpassung an die Größe des Materialstückendes (35) aufweisen. Hierbei kann sie insbesondere die in Richtung der Rollenachse (30) sich erstreckende Breite des Aufnahmebereichs (34) an die Breite des Materialstückendes (35) angepasst werden. Je nach Winkellage des aufzunehmenden Materialstücks (6,7,8,9,10,11) kann der Wickelträger (43) mit dem Gestell (22) von der Roboterhand (19) in die geeignete Ausrichtung gedreht werden.

Mit der Selektionseinrichtung (33) ist es möglich, aus dem Schnittbild auf dem Schneidtisch (5) gezielt das gewünschte Materialstück (6,7,8,9,10,11) und dessen Materialstückende (35) aufzunehmen und die benachbarten Bahnbereiche liegen zu lassen. Insbesondere kann verhindert werden, dass der umgebende Verschnitt (12) oder ein anderes, nicht gewünschtes Materialstück (6,7,8,9,10,11) aufgenommen und ebenfalls aufgewickelt wird.

Die Aufnahmeeinrichtung (32) und die Selektionseinrichtung (33) können in beliebig geeigneter Weise ausgebildet sein. In der gezeigten Ausführungsform sind sie als steuerbare Saugeinrichtung (36) ausgebildet, die eine veränderliche Saugbereichsgröße haben kann. Die Saugeinrichtung (36) ist am oder im Wickelträger (43) angeordnet und weist ein oder mehrere im oder am Rollenmantel (29) angeordnete Saugleisten (37) auf. Die Saugleisten (37) können sich in der gezeigten Weise in gerader Richtung und längs der Rollenachse (30) erstrecken. Sie können alternativ schräg angeordnet sein und z.B. in einer teilweisen oder umlaufenden Spirallinie am Rollenmantel (29) angeordnet sein.

Ferner können mehrere gleich oder unterschiedlich ausgebildete Saugleisten (37) verteilt über den Umfang oder Mantel des Materialträgers (24) oder Wickelträgers (43) angeordnet sein. Sie können von getrennt ansteuerbare Saugergruppen (51) gebildet werden. Figur 6 zeigt beispielhaft eine solche Variante.

Außerdem kann die Aufnahmeeinrichtung (32) umsteuerbar sein und die Abgabe der Materialstücke (6,7,8,9,10,11) erleichtern. Hierfür kann z.B. die Saugeinrichtung (36) auf Druck umgeschaltet werden und Luft oder ein anderes Fluid ausblasen.

Für die vorerwähnte Selektion und zur Schaffung veränderlicher und einzeln steuerbarer Saugbereichsgrößen kann die Saugleiste (37) in mehrere schaltbare Saugabschnitte (39) unterteilt sein. Die Saugleiste (37) kann entlang der Rollenachse (30) verteilt mehrere einzeln oder gruppenweise schaltbare Saugelemente (38) aufweisen, die z.B. die gezeigte Punktform besitzen. Über Ventile oder andere geeignete Schaltmittel können die Saugelemente (38) einzeln oder gruppenweise an mindestens einen Unterdruckerzeuger angeschlossen sein. Die Saugelemente (38) können aus einfachen Mantelöffnungen mit rückseitig angeschlossenen Saugleitungen bestehen. Alternativ können sie als Saugteller ausgebildet sein. Ferner können die Saugelemente (38) einzeln oder gruppenweise kleine eigenen Saugpumpen aufweisen. In einer anderen Variante können die Saugelemente (38) als kleine mittels Ventilen schaltbare und ggf. steuerbare Venturirohre ausgebildet sein, die an eine Druckluftleitung angeschlossen sind. Die Saug- oder Druckleitungen können einzeln verlegt oder als Leitungsnetzwerk ausgebildet sein. Daneben sind beliebige andere geeignete Ausgestaltungen der Saugeinrichtung (36) möglich.

Wie Figur 2 in einer beispielhaften Ausführungsform verdeutlicht, ist eine aus einer Punktreihe bestehende Saugleiste (37) in drei aneinander grenzende Saugabschnitte (39) unterteilt, die einzeln gesteuert und geschaltet werden können. Die Saugeinrichtung (36) kann ebenfalls mit der Robotersteuerung (20) verbunden sein.

Zur Aufnahme des Materialstückendes (35) wird der Wickelträger (43) vom Manipulator (18) z.B. derart gegenüber dem gewünschten Materialstück (6,7,8,9,10,11) positioniert, dass der mittlere Saugabschnitt (39) über dem Materialstückende (35) zu liegen kommt. Für die Aufnahme wird nur dieser Saugabschnitt (39) mit Unterdruck beaufschlagt, wobei die benachbarten Saugabschnitte (39) abgeschaltet sind. Hierdurch erfasst die Saugwirkung nur das gewünschte Materialstückende (35) und erstreckt sich nicht auf die anderen Materialbahnbereiche.

Bei größeren und insbesondere breiteren Materialstückenden (35) können mehrere Saugabschnitte (39) mit Unterdruck beschaltet werden, wobei der Wickelträger (43) entsprechend anders positioniert wird. Ferner ist es möglich, mehrere neben einander liegende Materialstücke (6,7,8,9,10,11) gleichzeitig aufzunehmen, z.B. mit den beiden äußeren Saugabschnitten (39), wobei der mittlere abgeschaltet wird, um den Verschnitt (12) liegen zu lassen.

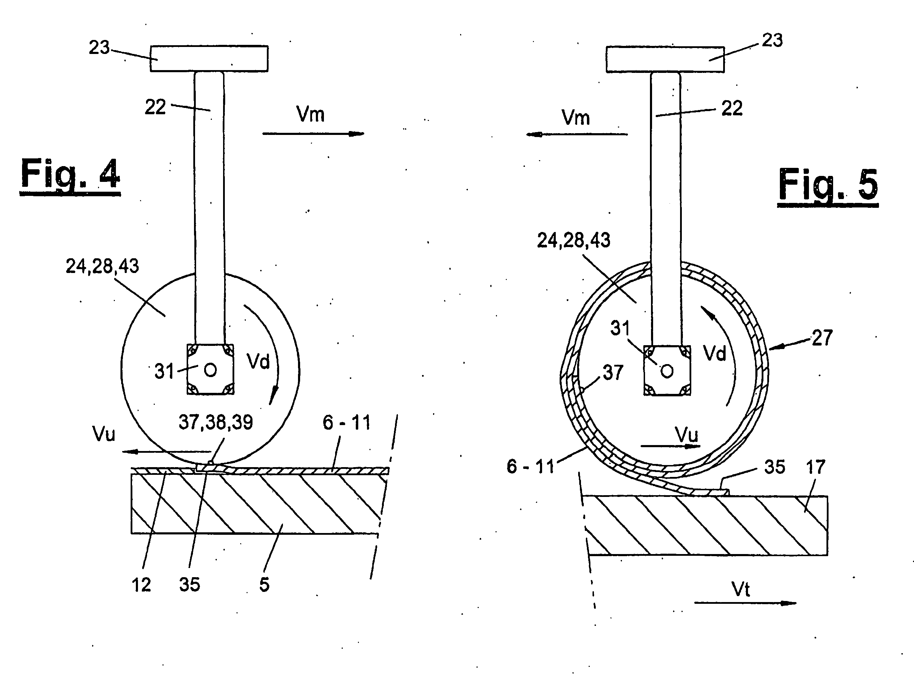

Wie Figur 4 in der Seitenansicht verdeutlicht, kann zum Anwickeln die Walze (28) mit nach unten gedrehter und über den Drehantrieb (31) in geeigneter Weise positionierter Saugleiste (37) auf dem gewünschten Materialstückende (35) aufgesetzt werden. Anschließend wird der Unterdruck eingeschaltet und das angesaugte Materialstückende (35) mit der Walze (28) über eine Roboterbewegung ein kleines Stück angehoben. Es wird dabei vom Schneidtisch (5) abgehoben und auch aus dem umgebenden Materialbahnbereich, insbesondere dem benachbarten Verschnitt (12) herausgehoben.

Beim Aufwickeln dreht sich durch den Drehantrieb (31) der Wickelträger (43). Dieser wird zugleich mit einer Vorschubbewegung des Manipulators (18) quer bzw. orthogonal zu seiner Längserstreckung bewegt. Die Vorschubgeschwindigkeit Vm des Manipulators (18) und die Drehgeschwindigkeit Vd der Rolle (28) können hierbei über die Robotersteuerung (20) aufeinander abgestimmt werden. Die Wickelbewegung kann dadurch verzug- und spannungsfrei für das Materialstück (6,7,8,9,10,11) erfolgen. Der Wickelträger (43) kann nach dem Anwickeln wieder auf das Materialstück (6,7,8,9,10,11) abgesenkt werden und auf diesem beim weiteren Wickelvorgang abwälzen. Der gebildete Wickel (27) kann mehrlagig sein.

Die Drehrichtung und die Drehgeschwindigkeit Vd sind so gewählt, dass die am Rollenmantel (29) sich ergebende Umfangsgeschwindigkeit Vu im wesentlichen gleich groß wie die Vorschubgeschwindigkeit Vm und dieser entgegen gerichtet ist. In Anpassung an die zunehmende Dicke des ggf. mehrlagigen Wickels (27) kann die Abstimmung der Drehgeschwindigkeit Vd auch von der Wickeldicke abhängen, wobei die Umfangsgeschwindigkeit Vu der äußeren Wickellage mit der Vorschubgeschwindigkeit Vm abgestimmt wird.

Sobald der Wickel (27) fertig ist, transportiert ihn der Manipulator (18) zur Abgabstelle, z.B. zum Ablagetisch (17), wo das Materialstück (6,7,8,9,10,11) wieder abgewickelt und abgegeben wird. Die Ablage kann auf der Tischoberfläche oder auf dem obersten Teil eines Materialstückstapels (42) erfolgen. Bei der Abgabe kann das aufgewickelte Materialstück (6,7,8,9,10,11) ggf. gedreht und in einer anderen Ausrichtung abgelegt werden, als es aufgenommen wurde.

Der Abwickelvorgang kann ebenfalls durch eine Überlagerung der Vorschubgeschwindigkeit Vm und der Drehgeschwindigkeit Vd erfolgen. Hierfür wird z.B. das rückwärtige herabhängende Materialstückende (35) ein Stück über die Tisch- oder Stapeloberfläche gezogen, um die korrekte Ausrichtung zu erhalten. Anschließend wird der zunächst etwas angehobene Wickelträger (43) abgesenkt und das Materialstück (6,7,8,9,10,11) abgewickelt. Der Abwickelvorgang kann beschleunigt werden, indem der Ablagetisch (17) in entgegengesetzter Richtung zum Manipulatorvorschub bewegt wird. Die dabei auftretenden Beträge der Vorschubgeschwindigkeiten Vm und Vt addieren sich, wobei die Drehgeschwindigkeit Vd bzw. die hieraus sich ergebende Umfangsgeschwindigkeit Vu entsprechend erhöht und zur Synchronisation angepasst werden. Der Abwickelvorgang kann dadurch schneller erfolgen als der Aufwickelvorgang.

Die Handhabungseinrichtung (15) kann eine Fluidzuführung (25) aufweisen, mit der ein inertes Fluid in geringer Menge am Materialstück (6,7,8,9,10,11) appliziert werden kann. Durch seine inerte Eigenschaft reagiert das Fluid nicht in unerwünschter Weise mit dem Werkstoff des Materialstücks (6,7,8,9,10,11). Das Fluid kann z.B. Wasser oder ein flüssiges Harz sein, welches z.B. mit dem Imprägnierharz des Faserwerkstoffs übereinstimmt oder zu diesem chemisch sehr ähnlich ist. Das Fluid gelangt beim Abwickeln zwischen den Untergrund und das abgewickelte Materialstück (6,7,8,9,10,11), wobei es durch den Auflagedruck unter Bildung eines sehr dünnen Haftfilms breitflächig verteilt wird. Der Haftfilm hält das abgelegte Materialstück (6,7,8,9,10,11) gegen seitliches Verrutschen fest.

Die Fluidzuführung (25) kann in beliebig geeigneter Weise ausgebildet und angeordnet sein. Sie kann z.B. die in Figur 2 gezeigte Ausbildung haben und am Querbalken des Gestells (22) angeordnet sein. Sie kann alternativ an einem Stützarm angeordnet sein und das Fluid direkt beim Ablegen in den Zwickel zwischen dem Materialstück (6,7,8,9,10,11) und dem Untergrund einspritzen. In weiterer Abwandlung kann die Fluidzuführung (25) an anderer Stelle angeordnet sein und sich z.B. am Ablagetisch (17) befinden.

Das Handlingwerkzeug (21) kann ein oder mehrere, ggf. mit der Steuerung (20) verbundene Messeinrichtungen (26) aufweisen. Dies können z.B. ein oder mehrere am Gestell (22) angeordnete Abstandssensoren (40) sein, die z.B. am oberen Querträger angeordnet und gegen den Wickel (27) gerichtet sind. Die Abstandssensoren (40) können z.B. als Laserscanner ausgeführt sein, die eine Abstandsmessung mittels Laufzeitmessung des pulsweise emittierten Laserstrahls durchführen. Über die Abstandsmessung von mehreren über die Wickelbreite verteilten Abstandssensoren (40) kann die Wickelbildung und die Wickelform überwacht werden. Außerdem kann die Lage des rückwärtigen Materialstückendes (35) detektiert werden.

Die Messeinrichtung (26) kann ferner eine Positionsmesseinrichtung und Positionsgeber für den Drehantrieb (31) beinhalten, welche die gewünschte Drehpositionierung des Wickelträgers (43) und der Saugleiste (37) ermöglichen. Über die Abstandssensoren (40) und deren Erfassung der Saugleiste (37) in oberer Stellung kann der Positionsgeber referiert werden.

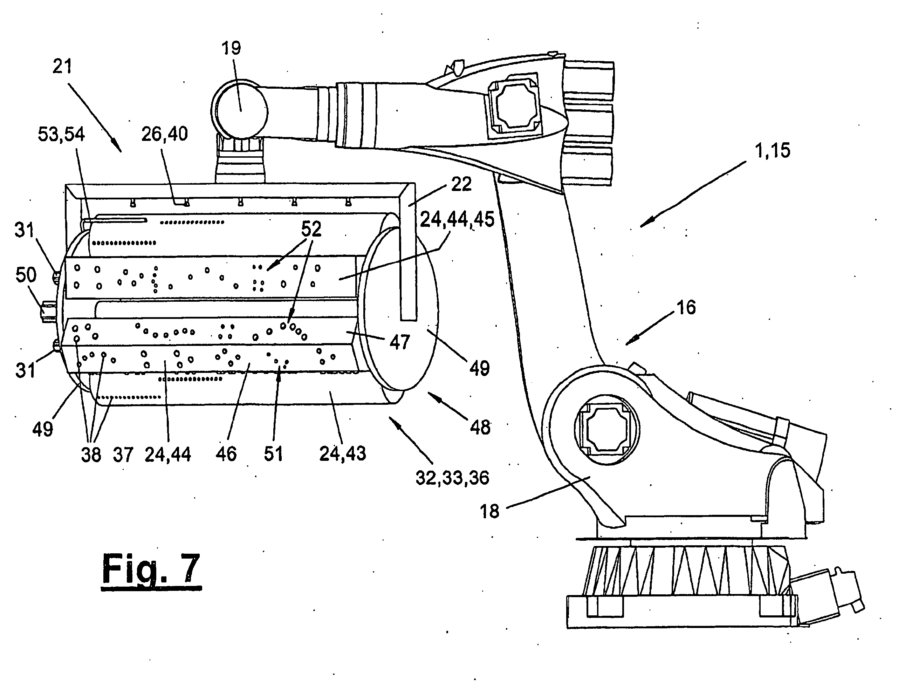

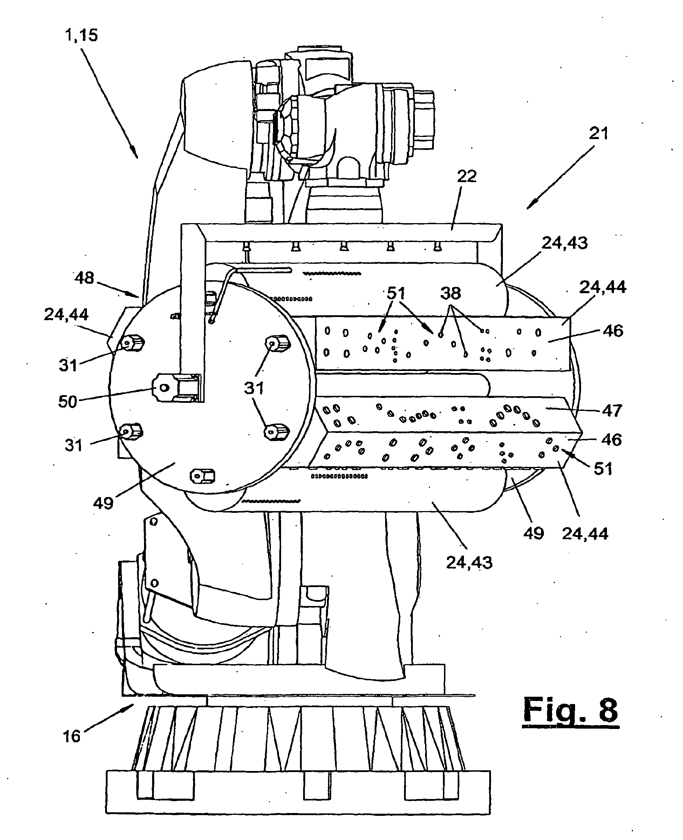

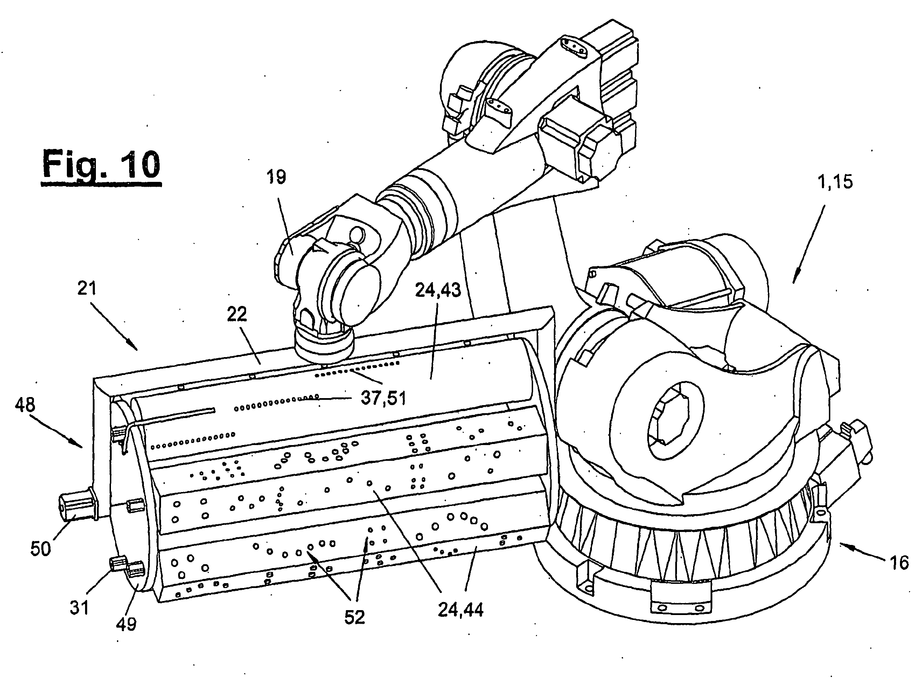

Figur 7 bis 11 zeigen verschiedene Varianten der Handhabungseinrichtung (15) und insbesondere des Handlingwerkzeugs (21). Die Handhabungseinrichtung (15) kann bei der vorbeschriebenen Bearbeitungsanlage (1) mit der im wesentlichen gleichen Funktion oder bei anderen Anlagen und Einsatzbereichen verwendet werden. Hierbei kann die Vorlage der Materialstücke (6,7,8,9,10,11) eine andere als im vorbeschriebenen Ausführungsbeispiel sein. Insbesondere ist eine Einzelvorlage der Materialstücke (nicht dargestellt) in beliebiger Zahl, Anordnung und Ausrichtung möglich.

Das Handlingwerkzeug (21) weist in diesen Varianten jeweils mehrere Materialträger (24) auf, die in geeigneter Weise am Gestell (22) starr oder beweglich angeordnet sind. In den gezeigten Ausführungsbeispielen sind die Materialträger (24) an einem Revolver (48) angeordnet, der am Gestell (22) drehbar gelagert ist und mit einem steuerbaren Antrieb (50) gedreht und positioniert werden kann. Der Revolver (48) weist zwei stirnseitige, z.B. kreisrunde Tragscheiben (49) mit der Drehlagerung (nicht dargestellt) auf. Zwischen den Tragscheiben (49) sind in geeigneter Weise, z.B. konzentrisch rund um die zentrale Revolverachse, verteilt mehrere vorzugsweise längliche, z.B. walzen-, stangen-, rohr- oder käfigförmige Materialträger (24) angeordnet. Die Träger- und Revolverachsen können parallel sein.

Die Materialträger (24) können ihrerseits starr oder beweglich an den Tragscheiben (49) gelagert sein. In den gezeigten Ausführungsformen ist eine Drehlagerung vorhanden, wobei ein oder mehrere Materialträger (24) auch einen eigenen steuerbaren Drehantrieb (31) aufweisen können, der an einer Tragscheibe (49) abgestützt ist.

Die Materialträger (24) können untereinander unterschiedlich ausgebildet sein. Sie können als zumindest bereichsweise hohle Körper gestaltet sein. Ein oder mehrere Materialträger (24) können z.B. in der Art der vorbeschriebenen Wickelträger (43) ausgebildet sein und Rollen oder Rohre mit einem kreisrunden oder ovalen Querschnitt besitzen. Der Wickelvorgang kann in der vorbeschrieben Weise stattfinden, wobei der Wickelträger (43) sich im Revolver (48) dreht und den Wickel ((27) aufnimmt bzw. anschließend abgibt.

Ein oder mehrere andere Materialträger (24) sind als Materialstückträger (44) ausgestaltet, die jeweils aus einer Trägerstange (45) mit einem prismatischen Querschnitt bestehen. Durch die prismatische Form werden am Außenumfang oder Mantel der Trägerstange (45) mehrere Trägerflächen (46,47) gebildet, die eine im Wesentlichen ebene oder ein- oder mehrachsig gewölbte Form haben können. Die Krümmung der Wölbung kann schwach ausgebildet und an die Elastizität des Materialstücks angepasst sein. Die Kanten an den Flächenübergängen können abgerundet sein.

Die Materialträger (24) im Revolver (48) sind einzeln in ihrer Positionierung und in ihrer Aufnahme- und Abgabefunktion steuerbar. Die Materialstückträger (44) mit den Trägerflächen (46) sind insbesondere zur Aufnahme von Materialstücken mit einer entsprechenden Formgebung ausgebildet und können diese festhalten. Ein Wickelvorgang muss dabei nicht stattfinden. Dies ist andererseits aber auch nicht ausgeschlossen, wobei abgerundete Kanten an den Übergängen der Trägerflächen (47) und eine schwach gewölbte Trägerflächenform für eine Wickelfunktion günstig sind. Ein Wickel kann auf mindestens einem drehenden Materialträger (24) gebildet werden. Alternativ ist eine Wickelbildung auf dem Revolver (48) durch dessen Drehung möglich. Die Materialstücke können wie im ersten Ausführungsbeispiel mattenartig und flexibel oder anders, insbesondere weitgehend unflexibel, ausgebildet sein.

Wenn die Trägerflächen (46) eine ebene oder schwach gekrümmte Form aufweisen, können Sie im Wesentlichen plan auf die auf einer Vorlage bereit gestellten Materialstücke gesetzt werden und diese in geeigneter Weise aufnehmen, z.B. durch die vorerwähnte Saugfunktion, durch Nadeln, Greifer oder andere geeignete Aufnahmewerkzeuge. Auch bei den Varianten von Figur 7 bis 11 können ein oder mehrere Aufnahmeeinrichtungen (32) und ein oder mehrere Selektionseinrichtungen (33) der vorbeschriebenen Art mit entsprechender konstruktiver und funktioneller Anpassung vorhanden sein. Die Materialstücke können auch in der vorbeschriebenen Weise wieder abgegeben werden.

Der Revolver (48) kann durch die mehrfach vorhandenen Materialträger (24) und die dadurch gegebene Möglichkeit zur Aufnahme einer Mehrzahl von Materialstücken (6,7,8,9,10,11) ein Zwischenlager für die besagten Materialstücke bilden und den beim ersten Ausführungsbeispiel beschriebenen Ablagetisch (17) ersetzen. Er bildet zudem ein Magazin für unterschiedliche Materialträger (24).

Der Revolver (48) bietet mit seiner Speicherfunktion die Möglichkeit, die Aufnahme- und Abgabereihenfolge der Materialstücke (6,7,8,9,10,11) und die Aufnahme- und Abgabeorte beliebig zu wählen und auch zu verändern. Die Materialstücke (6,7,8,9,10,11) können dabei insbesondere in einer Reihenfolge aufgenommen und in einer anderen Reihenfolge abgegeben bzw. abgelegt werden. Die Aufnahme-und Abgabereihenfolgen können dadurch an die jeweiligen und ggf. unterschiedlichen Erfordernisse angepasst werden, indem z.B. Materialstücke (6,7,8,9,10,11) aus mehreren Vorlagen nacheinander sortenrein aufgenommen und anschließend in einem Sortenmix abgegeben und ggf. auch übereinander abgelegt werden. Die Materialstücke (6,7,8,9,10,11) können einzeln und unabhängig voneinander aufgenommen und am Revolver (48) gehalten werden. Durch den Einzelzugriff können sie auch unabhängig voneinander wieder abgegeben werden.

In den Varianten von Figur 7 bis 11 sind auch Abwandlungen der Aufnahmeeinrichtung (32) und der Saugeinrichtung (36) dargestellt. Diese können in ähnlicher oder abgewandelter Weise auch beim ersten Ausführungsbeispiel mit dem einzelnen Wickelträger (43) verwendet werden.

Die mehreren Materialträger (24) können jeweils mit einer eigenen Saugeinrichtung (36) versehen sein oder an eine gemeinsame Saugeinrichtung (36) angeschlossen sein. Sie weisen am Umfang mehrere Saugelemente (38) auf, die wie im eingangs genannten Ausführungsbeispiel zu Saugleisten (37) oder zu anderen, insbesondere flächigen Formen von Saugergruppen (51) gruppiert sein können. Die Trägerstangen (45) können an ihren verschiedenen Trägerflächen (46,47) unterschiedliche Arten von Saugergruppen (51) aufweisen. Gruppenintern sind die einzelnen Saugelemente (38) unterschiedlich angeordnet, wodurch sich unterschiedliche Saugmuster (52) ergeben, wie sie z.B. in Figur 7 dargestellt sind. Die Trägerflächen (46,47) und ihre Saugergruppen (51) können hierdurch an unterschiedliche Arten von Materialstücken (6,7,8,9,10,11) angepasst werden, die sich z.B. hinsichtlich ihrer Form und Größe unterscheiden. Durch die Variantenvielfalt der Saugmuster (52) ist die Handlingeinrichtung (21) hochflexibel und lässt sich für die unterschiedlichsten Einsatzbereiche verwenden.

Am Revolver (48) oder auch an ein oder mehreren einzelnen Materialträgern (24) können ein oder mehrere Zusatzwerkzeuge (53) angeordnet sein. Sie können prozessunterstützend bei der Aufnahme und/oder Abgabe der Materialstücke wirken oder sonstige Hilfs- und Unterstützungsfunktionen haben. Ein oder mehrere solcher Zusatzwerkzeuge (53) können auch bei der vorbeschriebenen Ausführungsform von Figur 1 bis 6 mit einem einzelnen Wickelträger (43) vorhanden sein.

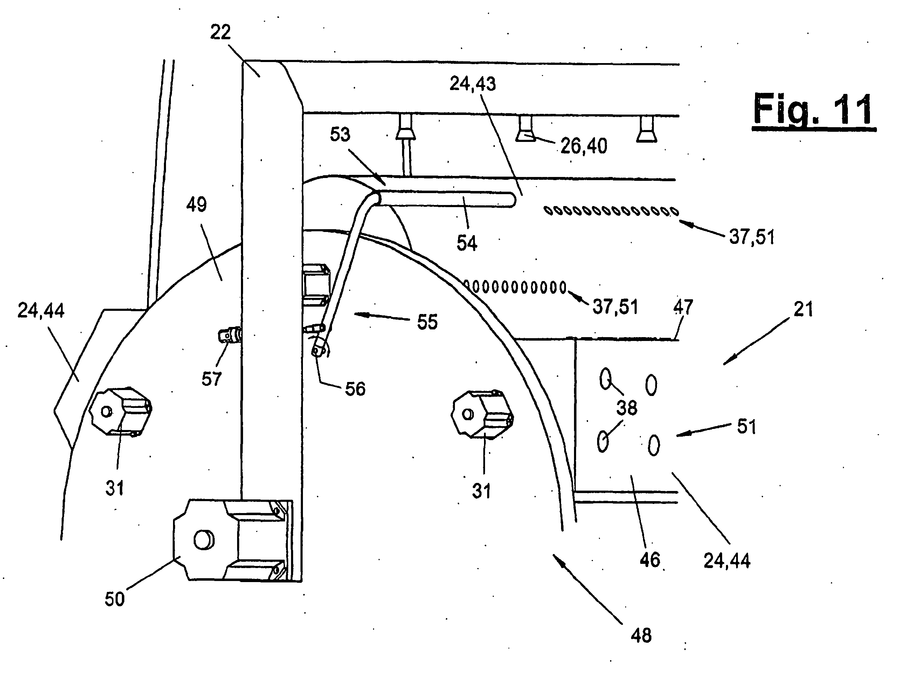

In Figur 7 und 11 ist ein Zusatzwerkzeug (53) dargestellt, welches als schwenkbarer Bügel (54) ausgebildet ist, der mittels einer Stelleinrichtung (55) zu einem Materialträger (24) hin bewegt und entfernt werden kann. Der Bügel (54) kann z.B. als Halter fungieren, mit dem ein aufgenommenes Materialstück am Materialträger (24) festgehalten werden kann. Bei einem Wickelträger (43) kann z.B. beim Anwickeln das vordere Materialstückende (35) zusätzlich und zeitweise festgehalten werden. Andererseits kann am Ende der Wickelbildung das rückwärtige freie Materialende am Wickel angedrückt und festgehalten werden.

Der Bügel (54) ist z.B. in der in Figur 11 gezeigten Weise mittels eines Lagers (56) an einer Tragscheibe (49) schwenkbar gelagert und hat eine abgewinkelte Form. Die steuerbare Stelleinrichtung (55) besitzt einen am Bügelarm angreifenden Stellantrieb (57), der z.B. von einem pneumatischen Zylinder gebildet werden kann.

Andere Arten von Zusatzwerkzeugen (53) können Messer, Stanzen, Beschichtungseinrichtungen, Einrichtungen zum Bedrucken oder Beschriften oder zum Prägen von ein oder mehreren Materialstücken sein. Außerdem können Bürsten oder andere Reinigungswerkzeuge vorhanden und z.B. an einer Trägerfläche (46,47) angeordnet sein. Die besagten Zusatzwerkzeuge (53) können starr oder beweglich am Handlingwerkzeug (21) angeordnet sein. Verfahrbare oder schwenkbare Messer können z.B. Materialstücke abschneiden.

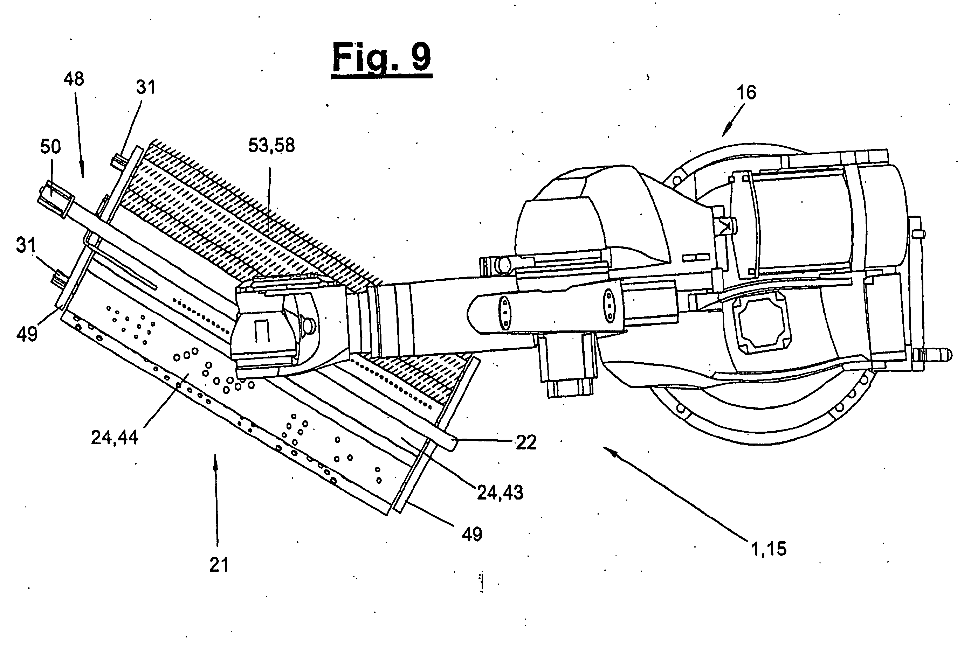

Figur 9 verdeutlicht eine weitere Variante, bei der ein Zusatzwerkzeug (53) an Stelle eines Materialträgers (24) am Revolver (48) angeordnet ist. Das Zusatzwerkzeug (53) kann z.B. eine starre oder bewegliche Bürste (58), insbesondere eine drehbare Bürstenwalze sein. Mit der Bürste (58) können z.B. der Schneidtisch (5) oder der Ablagetisch (17) gereinigt werden. Am Schneidtisch (5) kann beispielsweise der Verschnitt (12) mit der Bürste (58) in eine Abfallaufnahme abgekehrt werden. Mit der Bürste (58) oder einem anderen Reinigungswerkzeug können auch die Materialstücke (6,7,8,9,10,11) bearbeitet und insbesondere gereinigt werden.

Ein solches Zusatzwerkzeug (53) kann beispielsweise auch das Abgeben der Materialstücke (6,7,6,8,9,10,11) unterstützen und deren Nachbehandlung oder Nachbearbeitung ermöglichen. Hierzu kann das Zusatzwerkzeug (53) als Andrückwalze, Bügelwalze oder dergl. ausgebildet sein. In einer weiteren Variante kann ein Zusatzwerkzeug (53) zum Reinigen oder anderweitigen Behandeln der Materialträger (24) vorgesehen sein. Dies kann z.B. ein Abstreifer sein, der evtl. Materialreste vom Rollenmantel (29) oder den Trägerflächen (46,47) entfernt und ggf. auch die Saugelemente (38) reinigt.

Die Materialträger (24) können außer der Aufnahme und Abgabe von Materialstücken (6,7,8,9,10,11) ein oder mehrere Zusatzfunktionen ausüben. Beispielsweise lassen sich mit einem Materialträger (24) Haftstreifen oder dergl. von einem Spender (nicht dargestellt) entnehmen und auf einem Ablagetisch (17) oder einem anderen Untergrund platzieren, auf denen anschließend ein Materialstück (6,7,8,9,10,11) aufgelegt werden soll. Hierfür ist die Mehrfachanordnung von Materialträgern (24) und insbesondere der Revolver (48) besonders günstig.

Die Materialträger (24) haben in den gezeigten Ausführungsbeispielen eine im wesentlichen mittensymmetrische Form und sind auch im Wesentlichen mittensymmetrisch drehbar gelagert. Alternativ kann eine asymmetrische Querschnittsform und/oder eine außermittige Lagerung vorhanden sein. Der Trägerquerschnitt kann z.B. den Umriss eines an ein oder mehreren Seite abgeflachten Ovals oder Kreises haben.

Ferner können ein oder mehrere Materialträger (24) am Gestell (22) mit ein oder mehreren Zusatzachsen, z.B. mittels einer Lenkeranordnung oder dergl., zusätzlich beweglich gelagert sein. Eine solche Anordnung ist auch in Verbindung mit einem Revolver (48) möglich. Entsprechende Zusatzachsen sind auch für ein oder mehrere Zusatzwerkzeuge (53) möglich. Beispielsweise können hierdurch mehrere Materialträger (24) gleichzeitig in Funktion treten, wodurch z.B. mehrere Materialstücke übereinander abgelegt werden oder gleichzeitig abgelegt und nachbehandelt, z.B. angedrückt, gereinigt oder dergl. werden.

Das Handlingwerkzeug (21) kann austauschbar sein. Hierfür kann eine Wechselkupplung zwischen der Roboterhand (19) und dem Gestell (22) angeordnet sein. Die Bearbeitungsanlage (1) kann ein Magazin für mehrere Handlingwerkzeuge (21) aufweisen, die bei Bedarf ausgetauscht werden können. In ähnlicher Weise ist es möglich, an einer Handlingeinrichtung (21), z.B. einem Revolver (48), ein oder mehrere Materialträger (24) bei Bedarf auszutauschen, wobei hierfür an der Lagerung entsprechende Schnellkupplungen vorgesehen sind. Der Austausch kann in den genannten Fällen auch automatisch oder von Hand erfolgen.

In weiterer Abwandlung der gezeigten Ausführungsbeispiele kann das Handlingwerkzeug (21) mehrere relativ ortsfest am Gestell (22) gelagerte Materialträger (24) aufweisen. An Stelle eines Revolvers (48) kann das Handlingwerkzeug (21) auch eine andere Wechseleinrichtung zur Aufnahme mehrerer Materialträger (24) und zur Positionierung des jeweils gewünschten Materialträgers (24) an der benötigten Funktionsstelle aufweisen. Die beschriebenen Ausführungsbeispiele zur Funktion und zum Betrieb eines Revolvers (48) können entsprechend auch auf diese Abwandlungen des Handlingwerkzeugs (21) adaptiert werden.

Variabel sind ferner die Einsatzbereiche der Handhabungseinrichtung (15) und die Art und Ausbildung der Bearbeitungsanlage (1). Beispielsweise können mit der Handhabungseinrichtung (15) anderweitig vorbereitete Rollen oder Wickel, z.B. Dachpapperollen, aufgenommen und in der gewünschten Weise abgelegt und abgegeben werden. Hierbei kann z.B. Dachpappe auf einem Dach maschinell und automatisch ausgerollt und abgelegt werden. Der Manipulator (18) kann hierfür in entsprechend geeigneter Weise ausgebildet sein und z.B. als Gelenkarmroboter auf einem Lastfahrzeug verfahrbar angeordnet sein. Die Roboterarme haben hierfür eine entsprechend große Länge und ermöglichen ein Einklappen für den Transport.

Abwandlungen der gezeigten und beschriebenen Ausführungsformen sind in verschiedener Weise möglich. Die Aufnahmeeinrichtung (32) kann mit mechanischen Greifelementen, z.B. mit Nadeln, Haken oder dergl. ausgerüstet sein, mit denen sich mechanisch unempfindliche oder verformungstolerante Materialstücke (6,7,8,9,10,11) greifen lassen. Das Anwickeln kann außerdem durch eine Mehrfachanordnung von Walzen oder Rollen unter Einklemmung des Materialstückendes (35) erfolgen. Ferner ist es möglich, auf den Drehantrieb (31) zu verzichten oder diesen in anderer Weise zu steuern. An einem Schneidtisch (5) können zwei oder mehr Manipulatoren (18) angeordnet sein, die abgestimmt arbeiten.

### BEZUGSZEICHENLISTE

- 1: Bearbeitungsanlage
- 2: Schneidstation
- 3: Materialbahn
- 4: Trennwerkzeug
- 5: Schneidtisch
- 6: Materialstück
- 7: Materialstück
- 8: Materialstück
- 9: Materialstück
- 10: Materialstück
- 11: Materialstück
- 12: Verschnitt
- 13: Auflegestation
- 14: Werker
- 15: Handhabungseinrichtung
- 16: Handhabungsgerät
- 17: Ablagetisch
- 18: Manipulator, Gelenkarmroboter
- 19: Roboterhand
- 20: Robotersteuerung
- 21: Handlingwerkzeug
- 22: Gestell
- 23: Anschluss
- 24: Materialträger
- 25: Fluidzuführung
- 26: Messeinrichtung
- 27: Wickel
- 28: Rolle
- 29: Rollenmantel
- 30: Längsachse
- 31: Drehantrieb Materialträger
- 32: Aufnahmeeinrichtung
- 33: Selektionseinrichtung
- 34: Aufnahmebereich
- 35: Materialstückende
- 36: Saugeinrichtung
- 37: Saugleiste
- 38: Saugelement
- 39: Saugabschnitt
- 40: Sensor, Abstandssensor
- 41: Tischantrieb
- 42: Materialstückstapel
- 43: Wickelträger
- 44: Materialstückträger
- 45: Trägerstange
- 46: Trägerfläche
- 47: Trägerfläche
- 48: Revolver
- 49: Tragscheibe
- 50: Drehantrieb Revolver
- 51: Saugergruppe
- 52: Saugmuster
- 53: Zusatzwerkzeug
- 54: Bügel
- 55: Stelleinrichtung
- 56: Lager
- 57: Stellantrieb
- 58: Bürste

- Vm: Vorschubgeschwindigkeit Manipulator
- Vu: Umfangsgeschwindigkeit
- Vd: Drehgeschwindigkeit
- Vt: Vorschubgeschwindigkeit Ablegetisch

## Patentansprüche

1. Handhabungseinrichtung für flexible mattenartige Materialstücke (6,7,8,9,10,11) aus Faserwerkstoffen, insbesondere CFK, mit ein oder mehreren Handhabungsgeräten (16), die einen mehrachsigen Manipulator (18) mit einem Handlingwerkzeug (21) zum Aufnehmen, **Transportieren** und Abgeben von mindestens einem Materialstück (6,7,8,9,10,11) aufweisen, **dadurch gekennzeichnet, dass** das Handlingwerkzeug (21) mindestens einen drehbaren und positionierbaren walzenartigen Materialträger (24) aufweist, der zur Aufnahme von einem oder mehreren Materialstücken (6,7,8,9,10,11) an seinem Umfang ausgebildet ist.

2. Handhabungseinrichtung nach Anspruch 1, **dadurch gekennzeichnet, dass** das Handlingwerkzeug (21) ein mit **einer** Manipulatorhand (19) verbindbares Gestell (22) zur starren oder beweglichen Aufnahme von ein oder mehreren Materialträgern (24) aufweist.

3. Handhabungseinrichtung nach Anspruch 1 oder 2, **dadurch gekennzeichnet, dass** der Materialträger (24) eine steuerbare Aufnahmeeinrichtung (32) für mindestens ein Materialstück (6,7,8,9,10,11) aufweist.

4. Handhabungseinrichtung nach Anspruch 3, **dadurch gekennzeichnet, dass** die Aufnahmeeinrichtung (32) ein Aufnahmewerkzeug mit einer Saugfunktion oder mit Nadeln oder mit Greifer aufweist.

5. Handhabungseinrichtung nach einem der vorhergehenden Ansprüche, **dadurch gekennzeichnet, dass** der Materialträger (24) einen steuerbaren Drehantrieb (31) aufweist.

6. Handhabungseinrichtung nach einem der vorhergehenden Ansprüche, **dadurch gekennzeichnet, dass** das Handlingwerkzeug (21) einen beweglichen Revolver (48) mit mehreren Materialträgern (24) aufweist.

7. Handhabungseinrichtung nach **Anspruch 6**, **dadurch gekennzeichnet, dass** der Revolver (48) mehrere parallele Tragscheiben (49) mit dazwischen starr oder drehbar angeordneten Materialträgern (24) aufweist, wobei die Tragscheiben (49) drehbar im Gestell (22) gelagert sind und mit einem Drehantrieb (50) verbunden sind.

8. Handhabungseinrichtung nach einem der vorhergehenden Ansprüche, **dadurch gekennzeichnet, dass** der Materialträger (24) als drehbarer Wickelträger (43) zum Aufwickeln und Abwickeln von mindestens einem Materialstück (6, 7, 8, 9, 10, 11) ausgebildet ist.

9. Handhabungseinrichtung nach einem der Ansprüche 1 bis 6, **dadurch gekennzeichnet, dass** der Materialträger (24) als Materialstückträger (44) ausgebildet ist und mindestens eine Trägerstange (45) mit einem prismatischen Querschnitt und mit ein oder mehreren Trägerflächen (46,47) zur Aufnahme von mindestens einem Materialstück (6, 7, 8, 9, 10, 11) aufweist.

10. Handhabungseinrichtung nach einem der vorhergehenden Ansprüche, **dadurch gekennzeichnet, dass** die Aufnahmeeinrichtung (32) eine Selektionseinrichtung (33) zur Einstellung der Aufnahmebereichsgröße auf die Größe des Materialstücks (6, 7, 8, 9, 10, 11) oder des Materialstückendes (35) aufweist.

11. Handhabungseinrichtung nach **Anspruch 10**, **dadurch gekennzeichnet, dass** die Aufnahmeeinrichtung (32) mit der Selektionseinrichtung (33) als steuerbare Saugeinrichtung (36) mit einer veränderlichen Saugbereichsgröße ausgebildet ist.

12. Handhabungseinrichtung nach **Anspruch 11**, **dadurch gekennzeichnet, dass** die Saugeinrichtung (36) am Materialträger (24) angeordnet ist und mehrere im Rollenmantel (29) oder in einer Tragfläche (46,47) angeordnete Saugelemente (38) aufweist.

13. Handhabungseinrichtung nach einem der vorhergehenden Ansprüche, **dadurch gekennzeichnet, dass** das Handlingwerkzeug (21) ein oder mehrere Zusatzwerkzeuge (53) aufweist.

14. Bearbeitungsanlage für flexible mattenartige Materialstücke (6 - 11) aus Faserwerkstoffen, insbesondere CFK, wobei die Bearbeitungsanlage (1) mindestens eine Schneidstation (2) zum verschnittarmen Ausschneiden von mehreren Materialstücken (6, 7, 8, 9, 10, 11) aus einer zugeführten Materialbahn (3) aufweist, **dadurch gekennzeichnet, dass** die Bearbeitungsanlage (1) eine der Schneidstation (2) zugeordnete Handhabungseinrichtung nach Anspruch 1 (15) mit ein oder mehreren Handhabungsgeräten (16) besitzt, welche einen mehrachsigen Manipulator (18) mit einem Handlingwerkzeug (21) zum Aufwickeln und Abwickeln von mindestens einem Materialstück (6,7,8,9,10,11) aufweisen.

15. Verfahren zum Handhaben von flexiblen mattenartigen Materialstücken (6 - 11) aus Faserwerkstoffen, insbesondere CFK, wobei die in mehreren Exemplaren aus einer Materialbahn (3) mit Verschnitt (12) ausgeschnittenen Materialstücke (6,7,8,9,10,11) einzeln oder gruppenweise mit einem manipulatorgeführten Handhabungsgerät (16) selektiv aus dem umgebenden und zurückbleibenden Verschnitt (12) heraus aufgenommen und zu einem Wickel (27) aufgewickelt werden, wobei der Wickel (27) zu einer Ablegestelle transportiert und beim Ablegen des oder der Materialstücke (6,7,8,9,10,11) abgewickelt wird.

## Claims

1. Handling device for flexible mat-like pieces of material (6, 7, 8, 9, 10, 11) made of fibre materials, in particular CFRP, having one or more handling units (16), which have a multi-axial manipulator (18) with a handling tool (21) for picking up, transporting and discharging at least one piece of material (6, 7, 8, 9, 10, 11), **characterized in that** the handling tool (21) has at least one roll-like material carrier (24) which can be rotated and positioned and is designed to pick up one or more pieces of material (6, 7, 8, 9, 10, 11) on its circumference.

2. Handling device according to Claim 1, **characterized in that** the handling tool (21) has a frame (22) that can be connected to a manipulator hand (19) in order to pick up one or more material carriers (24) in a rigid or movable manner.

3. Handling device according to Claim 1 or 2, **characterized in that** the material carrier (24) has a controllable pick-up device (32) for at least one piece of material (6, 7, 8, 9, 10, 11).

4. Handling device according to Claim 3, **characterized in that** the pick-up device (32) has a pick-up tool having a suction function or having needles or having a gripper.

5. Handling device according to one of the preceding claims, **characterized in that** the material carrier (24) has a controllable rotary drive (31).

6. Handling device according to one of the preceding claims, **characterized in that** the handling tool (21) has a movable revolver (48) having a plurality of material carriers (24).

7. Handling device according to Claim 6, **characterized in that** the revolver (48) has a plurality of parallel support discs (49) having material carriers (24) arranged in a rigid or rotatable manner in between, wherein the support discs (49) are mounted in a rotatable manner in the frame (22) and are connected to a rotary drive (50).

8. Handling device according to one of the preceding claims, **characterized in that** the material carrier (24) is designed as a rotatable winding carrier (43) for winding up and unwinding at least one piece of material (6, 7, 8, 9, 10, 11).

9. Handling device according to one of Claims 1 to 6, **characterized in that** the material carrier (24) is designed as a material-piece carrier (44) and has at least one carrying rod (45) having a prismatic cross section and having one or more carrying surfaces (46, 47) for picking up at least one piece of material (6, 7, 8, 9, 10, 11).

10. Handling device according to one of the preceding claims, **characterized in that** the pick-up device (32) has a selection device (33) for adjusting the size of the pick-up region to the size of the piece of material (6, 7, 8, 9, 10, 11) or of the end (35) of the piece of material.

11. Handling device according to Claim 10, **characterized in that** the pick-up device (32) having the selection device (33) is designed as a controllable suction device (36) having a suction region of variable size.

12. Handling device according to Claim 11, **characterized in that** the suction device (36) is arranged on the material carrier (24) and has a plurality of suction elements (38) arranged in the roller shell (29) or in a support surface (46, 47).

13. Handling device according to one of the preceding claims, **characterized in that** the handling tool (21) has one or more additional tools (53).

14. Processing plant for flexible mat-like pieces of material (6-11) made of fibre materials, in particular CFRP, wherein the processing plant (1) has at least one cutting station (2) for cutting a plurality of pieces of material (6, 7, 8, 9, 10, 11) in a low-offcut manner from a supplied material web (3), **characterized in that** the processing plant (1) has a handling device (15) according to Claim 1, which is assigned to the cutting station (2) and has one or more handling devices (16) which have a multi-axial manipulator (18) having a handling tool (21) for winding up and unwinding at least one piece of material (6, 7, 8, 9, 10, 11).

15. Method for handling flexible mat-like pieces of material (6-11) made of fibre materials, in particular CFRP, wherein the pieces of material (6, 7, 8, 9, 10, 11), which are cut as a plurality of specimens from a material web (3) with cutting waste (12), are picked up by way of a manipulator-guided handling device (16) individually or in groups in a selective manner from the surrounding cutting waste (12) which is left behind, and are wound up to form a wound roll (27), wherein the wound roll (27) is transported to a deposition point and is unwound when the piece(s) of material (6, 7, 8, 9, 10, 11) is/are deposited.

## Revendications

1. Dispositif de manipulation d'objets flexibles en forme de tapis (6, 7, 8, 9, 10, 11) en matières fibreuses, en particulier en PFC, comportant un ou plusieurs appareils de manipulation (16), qui présentent un manipulateur à plusieurs axes (18) avec un outil de manipulation (21) pour la réception, le transport et le transfert d'au moins un objet (6, 7, 8, 9, 10, 11), **caractérisé en ce que** l'outil de manipulation (21) présente au moins un support d'objet (24) en forme de rouleau pouvant tourner et être positionné, qui est réalisé en vue de recevoir un ou plusieurs objets (6, 7, 8, 9, 10, 11) sur sa périphérie.

2. Dispositif de manipulation selon la revendication 1, **caractérisé en ce que** l'outil de manipulation (21) présente un châssis (22) pouvant être relié à une main de manipulateur (19) pour la réception rigide ou mobile d'un ou de plusieurs supports d'objet (24).

3. Dispositif de manipulation selon la revendication 1 ou 2, **caractérisé en ce que** le support d'objet (24) présente un dispositif de réception (32) pouvant être commandé pour au moins un objet (6, 7, 8, 9, 10, 11).

4. Dispositif de manipulation selon la revendication 3, **caractérisé en ce que** le dispositif de réception (32) présente un outil de réception avec une fonction d'aspiration ou avec des aiguilles ou avec des pinces.

5. Dispositif de manipulation selon l'une quelconque des revendications précédentes, **caractérisé en ce que** le support d'objet (24) présente un entraînement rotatif pouvant être commandé (31).

6. Dispositif de manipulation selon l'une quelconque des revendications précédentes, **caractérisé en ce que** l'outil de manipulation (21) présente une tourelle mobile (48) avec plusieurs supports d'objet (24).

7. Dispositif de manipulation selon la revendication 6, **caractérisé en ce que** la tourelle (48) présente plusieurs disques de support parallèles (49) avec des supports d'objet (24) rigides ou rotatifs disposés entre ceux-ci, dans lequel les disques de support (49) sont montés de façon rotative dans le châssis (22) et sont reliés à un entraînement rotatif (50).

8. Dispositif de manipulation selon l'une quelconque des revendications précédentes, **caractérisé en ce que** le support d'objet (24) se présente sous la forme d'un support de rouleau rotatif (43) pour l'enroulement et le déroulement d'au moins un objet (6, 7, 8, 9, 10, 11).

9. Dispositif de manipulation selon l'une quelconque des revendications 1 à 6, **caractérisé en ce que** le support d'objet (24) se présente sous la forme d'un support d'article (44) et présente au moins une tringle de support (45) de section transversale prismatique et avec une ou plusieurs faces de support (46, 47) destinées à recevoir au moins un objet (6, 7, 8, 9, 10, 11).

10. Dispositif de manipulation selon l'une quelconque des revendications précédentes, **caractérisé en ce que** le dispositif de réception (32) présente un dispositif de sélection (33) pour le réglage de la grandeur de la zone de réception à la grandeur de l'objet (6, 7, 8, 9, 10, 11) ou de l'extrémité (35) de l'objet.

11. Dispositif de manipulation selon la revendication 10, **caractérisé en ce que** le dispositif de réception (32) avec le dispositif de sélection (33) se présente sous la forme d'un dispositif d'aspiration (36) pouvant être commandé avec une zone d'aspiration de grandeur variable.

12. Dispositif de manipulation selon la revendication 11, **caractérisé en ce que** le dispositif d'aspiration (36) est disposé sur le support d'objet (24) et présente plusieurs éléments aspirants (38) disposés dans la surface latérale (29) du rouleau ou dans une face de support (46, 47).

13. Dispositif de manipulation selon l'une quelconque des revendications précédentes, **caractérisé en ce que** l'outil de manipulation (21) présente un ou plusieurs outils supplémentaires (53).

14. Installation de traitement d'objets flexibles en forme de tapis (6 - 11) en matières fibreuses, en particulier en PFC, dans laquelle l'installation de traitement (1) présente au moins une station de coupe (2) pour la coupe sans gros déchets de plusieurs objets (6, 7, 8, 9, 10, 11) à partir d'une bande de matière fournie (3), **caractérisée en ce que** l'installation de traitement (1) comporte un dispositif de manipulation (15) selon la revendication 1 associé à la station de coupe (2), avec un ou plusieurs appareils de manipulation (16) qui présentent un manipulateur (18) à plusieurs axes avec un outil de manipulation (21) pour l'enroulement et le déroulement d'au moins un objet (6, 7, 8, 9, 10, 11).

15. Procédé de manipulation d'objets flexibles en forme de tapis (6 - 11) en matières fibreuses, en particulier en PFC, dans lequel les objets (6, 7, 8, 9, 10, 11) découpés en plusieurs exemplaires hors d'une bande de matière (3) avec des déchets (12) sont repris individuellement ou en groupe avec un appareil de manipulation (16) guidé par un manipulateur de façon sélective hors des déchets (12) qui les entourent et qui restent, et sont enroulés en un rouleau (27), dans lequel le rouleau (27) est transporté jusqu'à un poste de dépôt et est déroulé lors du dépôt du ou des objets (6, 7, 8, 9, 10, 11).
